# EUROPÄISCHE PATENTANMELDUNG

(11) **EP 1 235 124 A2**
(43) Veröffentlichungstag der Anmeldung: **28.08.2002**
(21) Anmeldenummer: 02003961.6
(22) Anmeldetag: 22.02.2002
(51) Int. Cl.: G05B 19/042

(54) **Intelligente Haushaltsgrossgeräte**

(30) Priorität: 24.02.2001 DE 10109156
(71) Anmelder: Diehl AKO Stiftung & Co. KG, 88239 Wangen (DE)
(72) Erfinder: Westphal, Robert, Dr., 88239 Wangen/Allgäu (DE)
(74) Vertreter: Hofmann, Gerhard, Dipl.-Ing. Patentassessor

(57) **Zusammenfassung**

Um, hinsichtlich des Aufwandes für Programmsteuerungen, Haushaltsgroßgeräte (11) preisgünstig ausstatten zu können, ohne z.B. auf intelligente Optimierungsprogramme verzichten zu müssen, werden die Geräte (11) im wesentlichen nur für die Gewährleistung von Basisfunktionen ausgestattet, während die darüber hinaus gehende Intelligenz im Computer (15) wenigstens einer externen Zentralstation (16) in Form etwa von PC oder Laptop (17) programmiert ist, auf welche die Geräte (11) vorzugsweise drahtlos im DECT-Standard in Echtzeit ständig, oder bedarfsweise ereignisgesteuert, Zugriff haben.

## Beschreibung

Die Erfindung betrifft Haushaltsgroßgeräte gemäß dem Oberbegriff des Anspruches 1.

Unter intelligenten Haushaltsgroßgeräten werden hier solche Geräte verstanden, die nicht nur ein gerade vorgegebenes Steuerprogramm, wie eines für Waschmaschinen in der Zeitschrift ELEKTRONIK, Heft 15/2000 (Seiten 96/97 "Von der Idee zum Code") beschrieben ist, abarbeiten, sondern etwa zur Variation von Programmkomponenten mit Sensoren und Signalverarbeitungsprozessoren ausgestattet sind, um aktuelle Sensordaten für vorgegebene Optimierungsalgorithmen zur Verfügung zu stellen. Welche Möglichkeiten sich dadurch eröffnen, ergibt sich etwa aus dem Beitrag "Waschmaschinen werden immer schlauer" in der FAZ vom 11.05.1999 (Seite T2). Das trifft entsprechend auch für andere Haushaltsgroßgeräte zu, vgl. etwa die Beiträge "Der Herd denkt mit" in der WamS vom 25.10.1998 oder "Wenn Kühlschränke selber denken" in der Wirtschafts Woche vom 12.10.2000.

Allerdings fällt auf, daß die dort beschriebenen, oft geradezu phantastischen Möglichkeiten bisher größtenteils erst nur angedacht oder allenfalls anhand simulierter Sensordaten in Demonstrationsgeräten verfügbar sind. Ein Einzug solcher Zukunftstechnologien in serienmäßige Haushaltsgroßgeräte, zumal solche der Standardklasse, ist aus Kostengründen in absehbarer Zeit nicht zu erwarten. Euphorische Zukunftsvisionen über die künftige Ausstattung der Weißen Ware (vgl. "Im Haushalt sind die Controller los" in DESIGN&ELEKTRONIK Heft 01/2001, Seiten 28f) erweisen sich bei näherem Hinsehen eher als Akquisitionsbemühungen der Bauelementenindustrie, denn als konkrete Vorhersagen. Gerade die Entwicklung der Haushaltsgroßgeräte steht ja unter einem enormen Kostendruck, der wenig Freiheitsgrade für die Realisierung intelligenter Funktionen in den elektronischen Baugruppen läßt und es deshalb auch verbietet, mittels großzügiger bemessener Mikroprozessorleistungen und Speichervolumina komplexere Sensordaten aufzubereiten und aufwendigere Algorithmen abzuarbeiten. Zwar kann man durch Kompaktierung eines Programmes dessen Leistungsfähigkeit ohne Vergrößerung der Hardwareressourcen noch steigern (vgl. "Liebling, ich habe den Code geschrumpft" in DESIGN&ELEKTRONIK Heft 01/2001, Seiten 113 - 115), aber in der Praxis ist das nur für überschaubare und vor allem für schon ausgereifte Programme sinnvoll, bei denen künftig keine Veränderungen mehr zu erwarten sind; was aber gerade nicht der Fall ist, wenn aus Platzmangel bei der Hardware immer neue Kompromisse in der Software notwendig werden.

So werden dem Konsumenten betriebstechnische Möglichkeiten angepriesen, die von den Geräteherstellern angesichts der vom Handel diktierten Preispunkte gar nicht realisiert werden können. In Erkenntnis dieser Gegebenheiten liegt vorliegender Erfindung die technische Problemstellung zugrunde, die derzeit gegebenen und künftig abzusehenden sensorischen und signalverarbeitungstechnischen Möglichkeiten auch in intelligenten Haushaltsgeräten zu realisieren, ohne diese durch entsprechend gesteigerten Elektronik- und Programmaufwand spürbar zu verteuern.

Gemäß der im Kennzeichnungsteil des Hauptanspruches umrissenen Lösung wird dazu erfindungsgemäß vorgesehen, im einzelnen Haushaltsgroßgerät nur den für dessen Grundfunktionen erforderlichen Aufwand an Prozessor- und Speichervolumen zu realisieren und den Aufwand für darüber hinaus gehende Möglichkeiten in wenigstens eine und vorzugsweise nur eine einzige externe Zentralstation zu verlegen, die insbesondere mit ausreichender Prozessor- und Speicherkapazität für anspruchsvollere Sensordatenverwertung im Zuge von selbsttätigen Optimierungen des aktuellen Programmablaufes ausgestattet ist. In jener Zentralstation können dann sogar verschiedene Optimierungsprogramme für auch gleichzeitig betriebene, unterschiedliche Haushaltsgroßgeräte quasi-parallel abgearbeitet werden, d.h. alle Geräte greifen mit ihren aktuellen Sensordaten und Programmanforderungen auf diese eine externe Zentralstation zurück. Für den Datenaustausch kann dabei ein materieller oder ein immaterieller Bus zwischen den Haushaltsgroßgeräten und der externen Zentralstation realisiert sein, also eine Leitungsverbindung bzw. eine Funkverbindung im infraroten oder im hochfrequenten Spektrum. Im Interesse der Datenübertragungssicherheit kann es jedoch vorteilhaft sein, die Haushaltsgeräte, jedenfalls insoweit sie im gleichen Raum oder in benachbarten Räumen betrieben werden, untereinander materiell zu vernetzen, etwa mittels Datenaustausches über Netzleitungen (Powerline Communication); während der Zugang zur Daten-Funkstrecke, also letztlich zur externen Zentralstation dann von einer allen diesen Haushaltsgeräten gemeinsamen Übergabestation aus erfolgt. Dann kann die Zentralstation weitestgehend ortsungebunden und auch räumlich abgelegen betrieben werden, etwa in einem Büroraum im Dachgeschoß des Hauses, während die Haushaltsgroßgeräte im Keller und im Haushaltsraum des Erdgeschosses arbeiten.

Das eröffnet insbesondere die Möglichkeit, die Intelligenz für die Optimierung der Programme der einzelnen Haushaltsgroßgeräte in wenigstens einem der extern betriebenen Arbeitsplatzrechner (PC oder Laptop) zu verwirklichen, die ohnehin etwa als Internet-Zugang zunehmend im Dauerbetrieb arbeiten. So kann nicht nur auf deren gewöhnlich großzügig bemessen vorhandene Prozessor- und Speicherkapazitäten zugegriffen, sondern darüber hinaus auch über deren Peripherie (Bildschirm und Tastatur- oder Joystick-Eingabe) von solch einer Zentrale aus bedarfsweise in die einzelnen in den unterschiedlichen Haushaltsgeräten gerade ablaufenden Programme eingegriffen werden. Sollte dieser Computer einmal, z.B. irrtümlich, abgeschaltet werden, dann steht er natürlich nicht mehr den Haushaltsgroßgeräten als externe Zentralstation zum Abarbeiten von Programmteilen zur Verfügung. Die Geräte arbeiten jedoch weiter, wenn auch nicht mit z.B. dem hinsichtlich Wasserverbrauchs oder der Vermeidung von Lastspitzen optimierten Programm, aber immerhin mit den ihnen implementierten Standardprogrammen für ihre Grundfunktionen einschließlich manueller Eingriffsmöglichkeiten darein. Zweckmäßigerweise wird darauf am jeweiligen Gerät eigens hingewiesen, etwa durch akustische oder optische Signalgabe, vorzugsweise mit Klartextausgabe der Forderung, den Computer wieder einzuschalten, damit das optimierte Programm weiterlaufen kann.

Von Vorteil bei dieser erfindungsgemäßen Verlagerung der Intelligenz aus den Haushaltsgroßgeräten heraus in eine separat betriebene Zentralstation ist ferner, daß die verschiedenen Standardfunktionen der einzelnen Gerätetypen nicht in jedem einzelnen Haushaltsgerät erneut realisiert, geprüft und betrieben werden müssen, sondern für den allseitigen Zugriff nur einmal in der externen Zentralstation realisiert zu sein brauchen. Das gilt insbesondere für geräteübergreifende Funktionen wie für die Ermittlung der Uhrzeit oder von Umweltdaten, für das Bereitstellen von aus dem Internet beschafften Informationen oder für Visualisierungsprogramme zur Fernbedienung von der Zentralstation aus bzw. für Phonetikprogramme zur Sprachsteuerung und Sprachausgabe an den individuellen Geräten.

Die Funkverbindung mit dem Computer oder dergleichen Zentralstation kann auf die schon eingeführte Bluetooth-Technologie zurückgreifen (vgl. "Der 2,4-GHz-Boom" in ELEKTRONIK Heft 21/1999 Seiten 86ff, 87); sie wird aber zweckmäβiger im DECT-Standard (ggf. unter Implementierung seines Multimedia-Protokolles DECT-MP) realisiert, wie es als solches etwa in der WO-A-95/35618 näher erläutert ist, weil dann für die apparative Realisierung auf das große Spektrum kommerziell verfügbarer Schnurlos-Nebenstellenanlagen zurückgegriffen werden kann, die z.T. schon unmittelbar mit einer Schnittstelle zum Computeranschluß ausgestattet sind. Andernfalls weist auch der Computer als Zentralstation, wie die einzelnen Haushaltsgroßgeräte unmittelbar oder deren gemeinsame Übergabestation, die DECT-Schnittstelle für Mobilteile auf, um hierüber ohne zusätzlichen Schaltungsbedarf kommunizieren zu können.

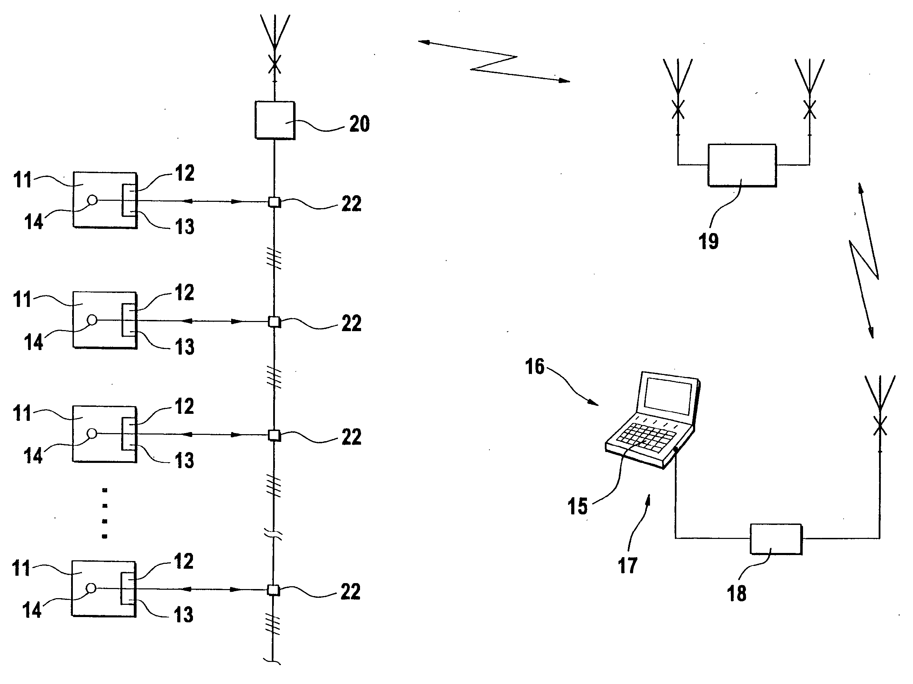

Bezüglich weiterer Abwandlungen und zusätzlicher Weiterbildungen wird auf die Unteransprüche verwiesen, sowie auf nachstehende Beschreibung eines in der Zeichnung unter Beschränkung auf das Wesentliche stark abstrahiert nach Art eines Funktions-Blockschaltbildes skizzierten bevorzugten Realisierungsbeispiels zur erfindungsgemäßen Lösung. Die einzige Figur der Zeichnung zeigt eine Reihe von Haushaltsgroßgeräten mit der minimalen Intelligenz für das Abarbeiten von Programmen in der jeweiligen Grundfunktion. Diese Geräte kommunizieren über ein örtliches Netzwerk mit einer Funkübergabestation für drahtlosen Datenaustausch, welche ihrerseits zumindest zeitweise über eine DECT-Basisstation mit einer externen Zentralstation in Form eines Laptop in Verbindung steht.

Bei den blockschaltmäßig angedeuteten Haushaltsgroßgeräten 11 kann es sich etwa um Waschmaschinen, Wäscheschleudern, Küchenherde, Spülmaschinen, Raumheizungen, Brauchwasserheizungen und dergleichen handeln. Jedes dieser Geräte 11 ist zur Gewährleistung wenigstens einer Basisfunktion mit einem Prozessor 12 samt Speicher 13 ausgestattet, der aber aus Kostengründen nicht auch dafür ausgelegt ist, aufwendigere Signalverarbeitung von Sensoren 14 für kompliziertere Optimierungsprogramme realisieren zu können.

Für jedes der Haushaltsgroßgeräte 11 sind die aufwendigeren Programme zur Aufbereitung der Signale von den Sensoren 14 und deren Berücksichtigung in Optimierungsprogrammen für die Ablaufsteuerung in den Computer 15 eines externen Zentralgerätes 16 ausgelagert, bei dem es sich um einen Arbeitsplatzrechner (Home-PC) etwa wie skizziert in der Ausführung eines Laptop 17 handeln kann. Der steht funktional über eine interne oder externe Schnittstelle 18 für Datenfunkübertragung nach dem DECT-Protokoll mit einer DECT-Basisstation 19 in Verbindung, die ihrerseits mit den einzelnen Haushaltsgroßgeräten 11 unmittelbar oder mit einer denen gemeinsamen Funk-Übergabestation 20 kommuniziert. Letztere kann über einen separat verlegten oder über einen das Haushaltsversorgungsnetz nutzenden Bus 21 seriell oder wie skizziert parallel die einzelnen Datenports 22 erfassen und so im Zeitmultiplex den Datenaustausch zwischen der gemeinsamen Zentralstation 16 und den einzelnen Haushaltsgroßgeräten 11 vermitteln.

Um also, hinsichtlich des Aufwandes für ihre Programmsteuerung, Haushaltsgroßgeräte 11 preisgünstig ausstatten zu können, ohne z.B. auf intelligente Optimierungsprogramme verzichten zu müssen, werden die Geräte 11 erfindungsgemäß im wesentlichen nur für die Gewährleistung von Basisfunktionen ausgestattet, während deren darüber hinaus gehende Intelligenz jeweils im Computer 15 wenigstens einer externen Zentralstation 16 in Form etwa von PC oder Laptop 17 programmiert ist, auf welche die Geräte 11 vorzugsweise drahtlos im DECT-Standard in Echtzeit quasi-gleichzeitig dauernd, oder bedarfsweise ereignisgesteuert, Zugriff haben.

## Patentansprüche

1. Haushaltsgroßgerät (11) mit Prozessor (12), Speicher (13) und Sensor (14) zum Abarbeiten wenigstens eines Funktionsprogrammes, **dadurch gekennzeichnet, daß** im Gerät (11) Basisprogrammfunktionen realisiert sind, über die hinaus das Gerät (11) auf einen Computer (15) in einer externen Zentralstation (16) Zugriff hat.

2. Haushaltsgroßgerät nach Anspruch 1, **dadurch gekennzeichnet, daß** die Basisprogrammfunktionen Arbeitsfunktionen des Gerätes (11) sind.

3. Haushaltsgroßgerät nach Anspruch 1 oder 2, **dadurch gekennzeichnet, daß** die Basisprogrammfunktionen Bedienungsfunktionen sind.

4. Haushaltsgroßgerät nach einem der vorangehenden Ansprüche, **dadurch gekennzeichnet, daß** in der Zentralstation (16) sensorgesteuerte Optimierungsprogramme für Arbeitsfunktionen der einzelnen Geräte (11) bereitgestellt sind.

5. Haushaltsgroßgerät nach einem der vorangehenden Ansprüche, **dadurch gekennzeichnet, daß** in der Zentralstation (16) Betriebsoptimierungsprogramme wie im Sinne des Nutzens preisgünstiger Tarifzeiten und / oder des zeitlichen Verteilens von Lastspitzen in Abhängigkeit von aktuellen Prioritäten gleichzeitig betriebener Geräte (11) bereitgestellt sind.

6. Haushaltsgroßgerät nach einem der vorangehenden Ansprüche, **dadurch gekennzeichnet, daß** in der Zentralstation (16) Bedienungsfunktionen insbesondere über Spracheingabe und mittels Sprachausgabe an den einzelnen Geräten (11) bereitgestellt sind.

7. Haushaltsgroßgerät nach einem der vorangehenden Ansprüche, **dadurch gekennzeichnet, daß** in der Zentralstation (16) Programme für geräteübergreifende Funktionen wie Entschlüsseln von Funk- oder Satelliten-Zeittelegrammen, Ermitteln von Umweltinformationen wie Luftdruck, Feuchte und Temperatur oder Abrufen von über das Internet gewinnbaren Informationen für alle Geräte (16) bereitgestellt sind.

8. Haushaltsgroßgerät nach Anspruch 1, **dadurch gekennzeichnet, daß** die Zentralstation (16) ein PC oder ein Laptop (17) ist.

9. Haushaltsgroßgerät nach Anspruch 1 oder 2, **dadurch gekennzeichnet, daß** der Zugriff drahtlos erfolgt.

10. Haushaltsgerät nach einem der vorangehenden Ansprüche, **dadurch gekennzeichnet, daß** es mit der Zentralstation (16) im DECT-Format oder im Bluetooth-Format kommuniziert.

11. Haushaltsgerät nach einem der vorangehenden Ansprüche, **dadurch gekennzeichnet, daß** es mit der Zentralstation (16) über eine DECT-Basisstation (19) kommuniziert.

12. Haushaltsgroßgerät nach einem der vorangehenden Ansprüche, **dadurch gekennzeichnet, daß** in der Zentralstation (16) über das DECT-Format oder über das DECT-Multimedia-Protokoll Visualisierungsfunktionen zur visuellen Unterstützung von Fernbedienungsoperationen an den Geräten (11) bereitgestellt sind.

13. Haushaltsgerät nach einem der vorangehenden Ansprüche, **dadurch gekennzeichnet, daß** es mit der Zentralstation (16) mittels einer mehreren Geräten (16, 16) gemeinsamen Übergabestation (20) kommuniziert.

14. Haushaltsgerät nach einem der vorangehenden Ansprüche, **dadurch gekennzeichnet, daß** es zur Kommunikation mit der Zentralstation (16) neben anderen Geräten (11) über einen diesen gemeinsamen Bus auf eine Übergabestation (20) geschaltet ist.

15. Haushaltsgerät nach einem der vorangehenden Ansprüche, **dadurch gekennzeichnet, daß** es zur Kommunikation mit der Zentralstation (16) über das Versorgungsnetz mit einer Übergabestation (20) kommuniziert.
